# EUROPÄISCHE PATENTSCHRIFT

(11) **EP 2 213 850 B1**
(45) Veröffentlichungstag und Bekanntmachung des Hinweises auf die Patenterteilung: **05.10.2011**
(21) Anmeldenummer: 10000506.5
(22) Anmeldetag: 20.01.2010
(51) Int. Cl.: F01L 7/02, F01L 7/08, F01L 7/10, F01L 7/16, F16K 5/00, F16K 5/18

(54) **Dichtungsanordnung für einen Drehschieber**
Seal assembly for a turning head
Agencement d'étanchéification pour un tiroir rotatif

(30) Priorität: 30.01.2009 DE 102009006904
(43) Veröffentlichungstag der Anmeldung: 04.08.2010
(73) Patentinhaber: AUDI AG, 85045 Ingolstadt (DE)
(72) Erfinder: Triebe, Steffen, 85084 Reichertshofen (DE); Staiger, Michael, 74336 Brackenheim (DE)

(56) Entgegenhaltungen:
- EP-A1- 0 096 645
- EP-A1- 0 624 718
- EP-A2- 0 344 584
- EP-A2- 1 055 802
- DE-A1- 4 017 822
- FR-A2- 2 576 060

## Beschreibung

Dichtungsanordnung für einen Drehschieber zur Abdichtung des Übergangs zwischen einem Querschnittsverstellglied und einem fluidführenden Bauteil, insbesondere einem Rohrabschnitt.

Derartige Dichtungsanordnungen werden vorzugweise zur Abdichtung von Drehschiebern eingesetzt, die das Fließverhaltens eines Kühlmittels einer Brennkraftmaschine steuern.

Die WO 05090841 A1 zeigt eine Drehschieberanordnung mit einem Rotor und einer Vielzahl von Öffnungen zur Steuerung der Fließwege eines Fluids, der in einer Rotorkammer mit korrespondieren Öffnungen zum Fluidaustausch drehbar gelagert ist. Der Rotor weist einen Sitz auf, in dem eine im wesentlichen ringförmige, flächige Dichtung mit einer Oberseite und einer Unterseite eingelassen ist, wobei die Oberseite die Innenfläche der Rotorkammer kontaktiert. Auf der Unterseite der Dichtung ist mindestens ein Federelement, insbesondere eine Schraubenfeder, angeordnet, welches sich an dem Rotor abstützt und somit eine Kraft in Richtung der Rotorkammer ausübt, wodurch die Oberseite der Dichtung stärker gegen die Innenfläche der Rotorkammer gedrückt wird. Zusätzlich ist ein Dichtungsring vorgesehen, der in eine Aussparung der Dichtung eingebracht wird, um den Spalt zwischen Dichtung und Rotor zusätzlich abzudichten.

Als nachteilig erweist sich jedoch der sehr aufwändige und filigrane Aufbau der gezeigten Dichtungsanordnung. So müssen in dem sehr begrenzten Bauraum zwischen Rotor und Rotorkammer, neben der eigentlichen Dichtung zusätzlich auch noch mehrere Federelemente und ein Dichtungsring angebracht werden. Dadurch sind entsprechende Aussparungen in der Wandung des Rotors vorzusehen, um die genannten Bauteile anzuordnen, was das verfügbare Innenvolumen des Rotors reduziert. Die dafür notwendige kleinere Dimensionierung der Bauteile verschlechtert wiederum die Dichtungseigenschaften und die Haltbarkeit. Weiterhin ergeben sich Probleme beim Zusammenbau der Dichtungsanordnung, da mehrere Bauteile lose zusammenhängen und erst beim Einbau in die Rotorkammer fixiert werden. Bis dahin besteht jedoch die Gefahr, dass diese sich aus ihren vorgesehene Positionen entfernen, was die Funktionstüchtigkeit negativ beeinträchtigt.

Die US 5 154 147 A zeigt eine Drehschieberanordnung mit einem Rotor, der drehbar in einer Rotorkammer gelagert ist, wobei ein definierter Abstand zwischen der Mantelfläche des Rotors und der Innenfläche der Rotorhammer besteht. Rotor und Rotorkammer weisen Öffnungen auf, die bei einer Verdrehung des Rotors in zumindest teilweise Überlagerung gebracht werden und dadurch verschiedene Fließwege für den Fluidstrom schalten können. In Aussparungen an der Innenfläche der Rotorkammer, die der jeweiligen Öff nung zugeordnet sind, sind Dichtlippen eingebracht, die mit dem Rotor in Kontakt gebracht werden können. Die Dichtlippen werden dabei von einem Federelement unterstützt, welches sich am Boden der jeweiligen Aussparung abstützt und das Dichtelement in Richtung des Rotors drückt. Die Aussparungen sind etwas größer dimensioniert als die Dichtlippen, so dass Fluid in den Spalt dazwischen gelangen und durch dessen Druck die Dichtlippen zusätzlich anheben kann. Dies verstärkt die Anpresskraft der Dichtlippen auf den Rotor.

Nachteilig an einer solchen Drehschieberanordnung ist die fehlende Beeinflussbarkeit der Anpresskraft, welche die Dichtlippen auf den Rotor ausüben, denn im wesentlichen bestimmt der Fluiddruck wie sehr die Dichtlippen aus ihren Aussparungen gehoben werden. Sinkt der Fluiddruck jedoch ab, so kann durch die verminderte Dichtwirkung Fluid über die Dichtlippen hinweg strömen. Der ständige Verschleiß der Dichtlippen verstärkt diesen Effekt sogar noch, da der zu überbrückende Abstand stetig größer wird. Weiterhin ist die gezeigte Drehschieberanordnung nicht wartungsfreundlich, denn um verschlissene Dichtlippen auszuwechseln muss der Rotor aus der Rotorkammer entnommen werden.

Die DE 100 34 679 A1 offenbart eine Dichtungsanordnung für einen Drehschieber mit einem über die rotationssymmetrische Außenkontur des Drehschiebers in gleitbeweglich dichter Verbindung stehenden Gleitring, der eine Drehschieber-Steueröffnung mit einem Mediums-Kanal verbindet. Der Gleitring ist dazu in einer Ausnehmung eines Drehschieber-Gehäuses zwischen einem Kanal-Anschluss und dem Drehschieber mit Umfangsspiel unter Zwischenschaltung eines als Ringmembran ausgebildeten Dichtelements beweglich geführt angeordnet. Die Ringmembran ist in ihrem äußeren Umfangsbereich zwischen einem Flansch des Mediums-Kanals und dem Drehschieber-Gehäuse fixiert und in ihrem inneren verformbaren Umfangsbereich unter Vorspannung von dem Gleitring kontaktiert.

Nachteilig ist, dass die Vorspannung der Ringmembran kaum anpassbar ist. Da die Ringmembran zwischen Mediums-Kanal und Drehschieber-Gehäuse unverschiebbar fixiert ist, wird die Vorspannung allein durch den daran anstehenden Gleitring induziert. Eine Formänderung des Gleitrings auf Grund von Fertigungstoleranzen oder Abnutzung kann dadurch nicht kompensiert werden, wodurch Leckageverluste entstehen können. Zudem muss ein großer Abstand zwischen dem Drehschieber und dem Mediums-Kanal zur Unterbringung von Gleitring und Ringmembran vorgesehen werden, der Nachteile bei der Bauraumausnutzung mit sich bringt.

Die EP 0 096 645 A1 und die EP 0 624 718 A1 offenbaren alternative Dichtungsanordnungen für Drehschieber.

Aufgabe der vorliegende Erfindung ist es daher eine Dichtungsanordnung für einen Drehschieber bereitzustellen, die robust, einfach zu montieren und wartungsfreundlich ist, sowie möglichst wenig Bauraum im Querschnittsverstellglied benötigt und dennoch gute Dichtungseigenschaften über einen langen Zeitraum bietet.

Diese Aufgabe wird durch die Merkmale des Patentanspruchs 1 gelöst.

Dichtungsanordnung für einen Drehschieber, aufweisend ein Querschnittsverstellglied mit einer Mantelfläche, die mindestens eine Durchgangsöffnung aufweist, sowie mindestens einen an dem Querschnittsverstellglied angrenzenden Rohrabschnitt mit einem Einlass, der durch eine Verdrehung des Querschnittsverstellglieds um eine Rotationsachse in zumindest teilweise Überdeckung mit der Durchgangsöffnung gebracht werden kann, wobei entlang der axialen Erstreckung des Rohrabschnitts ein erstes Dichtelement, ein zweites Dichtelement und eine Vorspanneinrichtung angeordnet sind, die einen Durchflusskanal für ein Fluid bilden, wobei das erste Dichtelement an der Mantelfläche des Querschnittsverstellglieds dichtend anliegt und wobei das zweite Dichtelement elastisch ausgebildet ist und zwischen dem ersten Dichtelement und der Vorspanneinrichtung angeordnet ist.

Indem das erste Dichtelement, das zweite Dichtelement und die Vorspanneinrichtung entlang der Achse des Rohrabschnitts angeordnet sind und dabei einen Durchflusskanal für das zu steuernde Fluid bilden, befindet sich die Dichtungsanordnung vollständig außerhalb des Querschnittsverstellglieds, wodurch dieses sehr günstig hergestellt werden kann und sein vollständiges Innenvolumen nutzbar bleibt. Dies erleichtert sowohl die Erstmontage, als auch die Wartung, denn die entsprechenden Bauteile liegen damit an leicht zugänglichen Stellen. Da das erste Dichtelement die Mantelfläche des Querschnittsverstellglieds umlaufend kontaktiert, ist der Übergang zwischen dem Querschnittsverstellglied und dem Rohrabschnitt stets zuverlässig gegenüber einem unbeabsichtigten Austritt von Fluid geschützt. Auch bei einer Verdrehung des Querschnittsverstellglieds um dessen Rotationsachse kommt das erste Dichtelement dauerhaft zur Anlage an der Mantelfläche. Dabei ist durch das elastische und somit axial kompressible zweite Dichtelement eine ausreichend hohe Anpresskraft des ersten Dichtelements gegenüber dem Querschnittsverstellglied gewährleistet, die sich durch die gewählte axiale Position der Vorspanneinrichtung beeinflussen lässt. Die Vorspanneinrichtung wird dabei so im Rohrabschnitt festgesetzt, dass das zweite Dichtelement entsprechend komprimiert wird. Die Kraft, welches bei der versuchten Wiederausdehnung des zweiten Dichtelements entsteht, stützt sich gegenüber der axial festgesetzten. Vorspanneinrichtung ab und drückt das erste Dichtelement somit gegen die Mantelfläche des Querschnittsverstellglieds, was dessen Dichtwirkung deutlich erhöht. Der Verschleiß am ersten Dichtelement über die Betriebsdauer des Drehschiebers wird dadurch weitestgehend vom zweiten Dichtelement kompensiert, indem dieses sich nach seiner Belastung durch die Vorspanneinrichtung entsprechend axial entspannt und somit ausdehnt, wodurch die entstehende Lücke zwischen erstem Dichtelement und Querschnittsverstellglied wieder geschlossen wird.

In einer bevorzugten Ausführung sind das erste und zweite Dichtelement elastisch ausgebildet, wobei das erste Dichtelement eine höhere Shore-Härte aufweist als das zweite Dichtelement. Indem das erste Dichtelement eine relativ hohe Shore-Härte aufweist, widersteht es dem Verschleiß durch das sich drehende Querschnittsverstellglied besser. Die relativ geringe Shore-härte des zweiten Dichtelements gewährleistet eine gute Elastizität, wodurch sich axiale Toleranzen besser kompensieren lassen.

In einer bevorzugten Ausführung weist das zweite Dichtelement einen Sitz auf, in dem ein Federelement angeordnet ist, welches eine Kraft in axialer Richtung aufbringen kann, die auf das zweite Dichtelement axial dehnend wirkt. Das Federelement im Sitz des zweiten Dichtelements erhöht die Steifigkeit des zweiten Dichtelements, wobei sich das zweite Dichtelement mit einer größeren Kraft gegenüber dem daran anliegenden ersten Dichtelement und der Vorspanneinrichtung abstützen wird. Dabei kann entweder die äußere oder innere Umfangsfläche das Federelements vom Sitz des zweiten Dichtelement umschlossen werden.

In einer bevorzugten Ausführung ist das Federelement als Druckfeder, insbesondere als Schraubenfeder ausgebildet. Dadurch ergibt sich eine besonders günstige Bauform in Verbindung mit guten Federeigenschaften.

In einer bevorzugten Ausführung ist die Vorspanneinrichtung in ihrer axialen Position verschiebbar und kann in einer Spannstellung festgesetzt werden. Durch die axiale Verschiebbarkeit der Vorspanneinrichtung kann eine bedarfsgerechte Anpassung der Anpresskraft in der Spannstellung erfolgen.

In einer bevorzugten Ausführung komprimiert die Vorspanneinrichtung in der Spannstellung das Federelement innerhalb des zweiten Dichtelements derart, dass das erste Dichtelement vom zweiten Dichtelement gegen das Querschnittsverstellglied gedrückt wird, wobei die Anpresskraft über einem Schwellwert liegt. Die Spannstellung definiert sich somit entsprechend des jeweiligen Anwendungsfalls und stellt die axiale Positionierung der Vorspanneinrichtung dar, bei der das Federelement innerhalb des zweiten Dichtelements derart belastet wird, dass das damit wirkverbundene erste Dichtelement eine Anpresskraft auf das Querschnittsverstellglied ausübt, die über einem Schwellwert liegt. Der Schwellwert repräsentiert dabei die Anpresskraft, die ausreicht um mit dem ersten Dichtelement den Übergang zwischen Querschnittsverstellglied und Rohrabschnitt dauerhaft und sicher gegen ein unerwünschtes Austreten von Fluid abzudichten.

In einer bevorzugten Ausführung wird die Vorspanneinrichtung durch einen ringförmigen Körper mit einem Aussengewinde gebildet, der mit einem Innengewinde des Rohrabschnitts in Eingriff steht. Indem das Aussengewinde der Vorspanneinrichtung mit dem Innengewinde des Rohrabschnitts in Eingriff steht, lässt sich die axiale Positionierung der Vorspanneinrichtung leicht und schnell variieren. Die Arretierung der Vorspanneinrichtung in der jeweiligen Spannstellung wird dadurch ebenso sicher und einfach realisiert.

In einer bevorzugten Ausführung stehen das erste und das zweite Dichtelement durch einen Form-, kraft- oder Stoffschluss in Eingriff.

In einer bevorzugten Ausführung stehen das erste und das zweite Dichtelement durch eine Nut-Feder-Verbindung in Eingriff. Indem das erste und zweite Dichtelements mit einer Nut-Feder-Verbindung miteinander in Eingriff stehen, können die beiden Bauteile aus verschiedenen Materialien einzeln vorproduziert werden und erst vor dem Einbau in den Drehschieber zu einer Einheit verbunden werden. Dadurch ergibt sich zudem auch eine wirksame Abdichtung des Übergangs zwischen erstem und zweitem Dichtelement, da die Nut-Feder-Verbindung einem Durchtritt von fluid entgegenwirkt.

In einer bevorzugten Ausführung ist das Querschnittsverstellglied als ein zylindrischer oder kugeliger Hohlkörper ausgebildet, der in einem Hüllkörper drehbar gelagert ist, wobei an dem Hüllkörper die entsprechenden Rohrabschnitte zum Fluidaustausch angeordnet sind. Der Hüllkörper dient der Aufnahme des um seine Rotationsachse verdrehbar gelagerten Querschnittsverstellglieds. Weiterhin sind am Hüllkörper die Rohrabschnitte angeordnet, durch die ein Fluidaustausch mit dem Querschnittsverstellglied statt findet. Durch eine Verdrehung der Querschnittsverstellglieds um dessen Rotationachse können einzelne Durchgangsöffnungen des Querschnittsverstellglieds in zumindest teilweise Überdeckung mit dem Einlass des entsprechenden Rohrabschnitts gebracht werden, während andere Durchlassöffnungen vom Hüllkörper verschlossen werden.

In einer bevorzugten Ausführung sind das erste und das zweite Dichtelement ringförmig ausgebildet. Dadurch bieten die Dichtelemente gute Strömungseigenschaften bei der Durchströmung mit Fluid und lassen sich zudem besonders einfach und kostengünstig herstetten.

In einer bevorzugten Ausführung besteht das erste Dichtelement aus Polyvinylidenfluorid oder Polytetrafluorethylen.

In einer bevorzugten Ausführung besteht das zweite Dichtelement aus Ethylen-Propylen-Dien-Kautschuk bestehe.

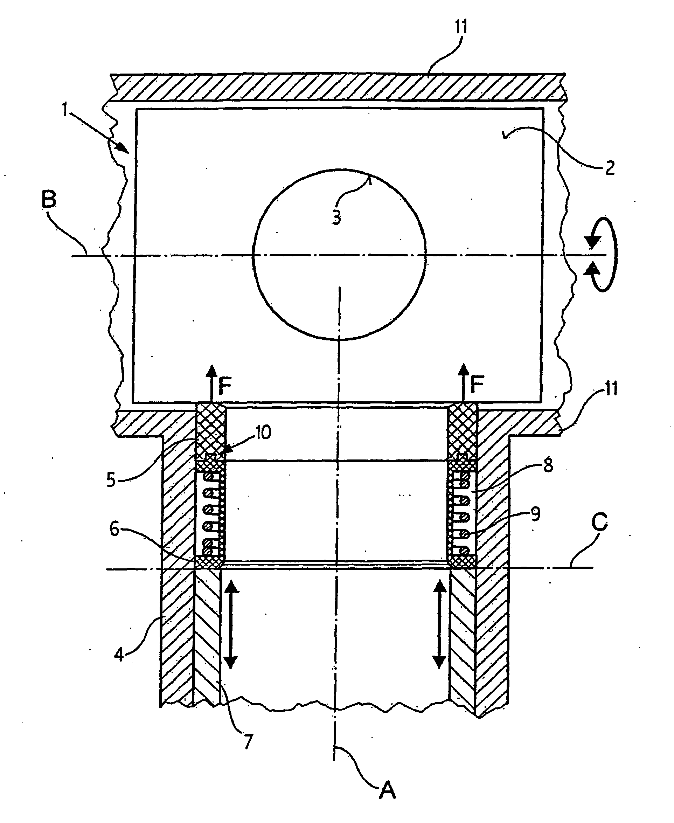

Weitere Einzelheiten, Merkmale und Vorteile der Erfindung ergeben sich aus der nachstehenden Beschreibung eines bevorzugten Ausführungsbeispiels unter Bezugnahme auf die Zeichnung.

Darin zeigt die Figur einen Teilschnitt eines Drehschiebers mit Querschnittsverstellglied und Dichtungsanordnung.

Gemäß der Figur weist eine Dichtungsanordnung für einen Drehschieber ein Querschnittsverstellglied 1 auf, welches durch einen Hohlkörper mit einer Mantelfläche 2 gebildet wird, der sich um eine Rotationsachse B verdrehen lässt. Auf der Mantelfläche. 2 ist mindestens eine Durchgangsöffnung 3 angeordnet, durch die ein Fluid in das Querschnittsverstellglied 1 ein- oder ausströmen kann. Für gewöhnlich ist ein derartiges Querschnittsverstellglied 1 in einem Hüllkörper 11 mit einer Vielzahl von korrespondierenden Rohrabschnitten gelagert, wobei die Durchgangsöffnungen 3 des Querschnittsverstellglieds -1 durch Verdrehen des Querschnittsverstellglieds 1 zumindest in teilweise Überdeckung mit dem entsprechenden Einlass des Rohrabschnitts 4 am Hüllkörper 11 gebracht werden können. Dadurch ergeben sich alternative Strömungswege für das zu steuernde Fluid. Entlang der Achse des Rohrabschnitts A sind ein erstes Dichtelement 5, ein zweites Dichtelement 6 und eine Vorspanneinrichtung 7 angeordnet. Diese bilden einen Fließweg für das Fluid von der Durchgangsöffnung 3 des Querschnittsverstellglieds 1 in den Rohrabschnitt 4. Das erste und zweite Dichtelement 5 und 6 sind als ringförmige und elastische Körper ausgebildet, deren Aussendurchmesser in etwa dem Innendurchmesser des Rohrabschnitts 4 entsprechen. Das erste Dichtelement 5 weist dabei eine höhere Shore-Härte auf, als das zweite Dichtelement 6. Das erste Dichtelement 5 kontaktiert die Mantelfläche 2 des Querschnittsverstellglieds 1 und dichtet somit den Übergang zwischen dem Querschnittsverstellglied 1 und dem Hüllkörper 11 gegen einen unerwünschten Fluidaustritt ab. Über eine Nut-Feder-Verbindung 10 ist das erste Dichtelement 5 mit dem zweiten Dichtelement 6 formschlüssig verbunden. Das zweite Dichtelement 6 weist einen Sitz 8 zur Aufnahme einer Druckfeder 9 in Form einer Schraubenfeder auf. Dabei umfasst das zweite Dichtelement 6 die Druckfeder 9 derart, dass diese eine axiale Kraft auf das zweite Dichtelement 6 ausüben und somit einer möglichen Stauchung desselbigen entgegenwirken kann. Die Vorspanneinrichtung 7 lässt sich axial entlang des Rohrabschnitts 4 verschieben und in einer Spannstellung C festsetzen. Indem die Vorspanneinrichtung 7 an dem zweiten Dichtelement 6 zur Anlage kommt und dieses wiederum mit dem ersten Dichtelement 5 wirkverbunden ist, lässt sich die Anpresskraft F des ersten Dichtelements 5 durch eine axiale Verschiebung der Vorspanneinrichtung 7 variieren. Dabei wird die Druckfeder 9 innerhalb des zweiten Dichtelements 6 gestaucht und übt somit eine Kraft auf die Vorspanneinrichtung 7 und das erste Dichtelement 5 aus.

### Liste der Bezugszeichen:

- A: Achse des Rohrabschnitts
- B: Rotationsachse
- C: Spannstellung
- F: Anpresskraft

- 1: Querschnittsverstellglied
- 2: Mantelfläche
- 3: Durchgangsöffnung
- 4: Rohrabschnitt
- 5: erstes Dichtelement
- 6: zweites Dichtelement
- 7: Vorspanneinrichtung
- 8: Sitz
- 9: Federelement
- 10: Nut-Feder-Verbindung
- 11: Hüllkörper

## Patentansprüche

1. Dichtungsanordnung für einen Drehschieber, aufweisend ein Querschnittsverstellglied (1) mit einer Mantelfläche (2), die mindestens eine Durchgangsöffnung (3) aufweist, sowie mindestens einen an dem Querschnittsverstellglied (1) angrenzenden Rohrabschnitt (4) mit einem Einlass, der durch eine Verdrehung des Querschnittsverstellglieds (1) um eine Rotationsachse (B) in zumindest teilweise Überdeckung mit der Durchgangsöffnung (3) gebracht werden kann, **dadurch gekennzeichnet, dass** entlang der axialen Erstreckung (A) des Rohrabschnitts (4) ein erstes Dichtelement (5), ein zweites Dichtelement (6) und eine Vorspanneinrichtung (7) angeordnet sind, die einen Durchflusskanal für ein Fluid bilden, wobei das erste Dichtelement (5) an der Mantelfläche (2) des Querschnittsverstellglieds (1) dichtend anliegt und wobei das zweite Dichtelement (6) elastisch ausgebildet ist und zwischen dem ersten Dichtelement (5) und der Vorspanneinrichtung (7) angeordnet ist.

2. Dichtungsanordnung nach Anspruch 1, **dadurch gekennzeichnet, dass** das erste und zweite Dichtelement (5, 6) elastisch ausgebildet sind, wobei das erste Dichtelement (5) eine höhere Shore-Härte aufweist als das zweite Dichtelement (6).

3. Dichtungsanordnung nach Anspruch 1 oder 2, **dadurch gekennzeichnet, dass** das zweite Dichtelement (6) einen Sitz (8) aufweist, in dem ein Federelement (9) angeordnet ist, welches eine Kraft in axialer Richtung (A) aufbringen kann, die auf das zweite Dichtelement (6) axial dehnend wirkt.

4. Dichtungsanordnung nach Anspruch 3, **dadurch gekennzeichnet, dass** das Federelement (9) als Druckfeder, insbesondere als Schraubenfeder, ausgebildet ist.

5. Dichtungsanordnung nach einem der Ansprüche 1 bis 4, **dadurch gekennzeichnet, dass** die Vorspanneinrichtung (7) in ihrer axialen Position (A) verschiebbar ist und in einer Spannstellung (C) festgesetzt werden kann.

6. Dichtungsanordnung nach einem der Ansprüche 1 bis 5, **dadurch gekennzeichnet, dass** die Vorspanneinrichtung (7) in der Spannstellung (C) das Federelement (9) innerhalb des zweiten Dichtelements (6) derart komprimiert, dass das erste Dichtelement (5) vom zweiten Dichtelement (6) gegen das Querschnittsverstellglied (1) gedrückt wird, wobei die Anpresskraft (F) über einem Schwellwert liegt.

7. Dichtungsanordnung nach einem der Ansprüche 1 bis 6, **dadurch gekennzeichnet, dass** die Vorspanneinrichtung (7) durch einen ringförmigen Körper mit einem Außengewinde gebildet wird, der mit einem Innengewinde des Rohrabschnitts (4) in Eingriff steht.

8. Dichtungsanordnung nach einem der Ansprüche 1 bis 7, **dadurch gekennzeichnet, dass** das erste und das zweite Dichtelement (5, 6) durch einen Form-, Kraft- oder Stoffischluss in Eingriff stehen.

9. Dichtungsanordnung nach einem der Ansprüche 1 bis 8, **dadurch gekennzeichnet, dass** das erste und das zweite Dichtelement (5, 6) durch eine Nut-Feder-Verbindung (10) in Eingriff stehen.

10. Dichtungsanordnung nach einem der Ansprüche 1 bis 9, **dadurch gekennzeichnet, dass** das Querschnittsverstellglied (1) als ein zylindrischer oder kugeliger Hohlkörper ausgebildet ist, der in einem Hüllkörper (11) drehbar gelagert ist, wobei an dem Hüllkörper (11) die entsprechenden Rohrabschnitte (4) zum Fluidaustausch angeordnet sind.

11. Dichtungsanordnung nach einem der Ansprüche 1 bis 10, **dadurch gekennzeichnet, dass** das erste und das zweite Dichtelement (5, 6) ringförmig ausgebildet sind.

12. Dichtungsanordnung nach einem der Ansprüche 1 bis 11, **dadurch gekennzeichnet, dass** das erste Dichtelement (5) aus Polyvinylidenfluorid oder Polytetrafluorethylen besteht.

13. Dichtungsanordnung nach einem der Ansprüche 1 bis 12, **dadurch gekennzeichnet, dass** das zweite Dichtelement (6) aus Ethylen-Propylen-Dien-Kautschuk besteht.

## Claims

1. Sealing arrangement for a rotary valve, comprising a cross-section adjustment member (1) having an outer surface (2) which comprises at least one through-opening (3), and comprising at least one tube portion (4) adjacent to the cross-section adjustment member (1) and having an inlet which can be brought into at least partial overlap with the through-opening (3) by a rotation of the cross-section adjustment member (1) about an axis of rotation (B), **characterised in that** a first seal element (5), a second seal element (6) and a biasing device (7) are arranged along the axial extension (A) of the tube portion (4) and form a throughflow duct for a fluid, the first seal element (5) lying tightly against the outer surface (2) of the cross-section adjustment member (1) and the second seal element (6) being formed resiliently and being arranged between the first seal element (5) and the biasing device (7).

2. Sealing arrangement according to claim 1, **characterised in that** the first and second seal element (5, 6) are resilient, the first seal element (5) exhibiting a greater Shore hardness than the second seal element (6).

3. Sealing arrangement according to either claim 1 or claim 2, **characterised in that** the second seal element (6) comprises a seat (8) in which a spring element (9) is arranged which can apply a force in the axial direction (A) which acts on the second seal element (6) in an axially stretching manner.

4. Sealing arrangement according to claim 3, **characterised in that** the spring element (9) is formed as a compression spring, in particular as a coil spring.

5. Sealing arrangement according to any one of claims 1 to 4, **characterised in that** the biasing device (7) is displaceable in the axial position (A) thereof and can be fixed in a tensioning position (C).

6. Sealing arrangement according to any one of claims 1 to 5, **characterised in that** in the tensioning position (C) the biasing device (7) compresses the spring element inside the second seal element (6) in such a way that the first seal element (5) is pressed against the cross section adjustment member (1) by the second seal element (6), the contact force (F) lying above a threshold value.

7. Sealing arrangement according to any one of claims 1 to 6, **characterised in that** the biasing device (7) is formed by a tubular member with an outer thread which engages with an inner thread of the tube portion (4).

8. Sealing arrangement according to any one of claims 1 to 7, **characterised in that** the first and second seal element (5, 6) are engaged by a positive, non-positive or cohesive fit.

9. Sealing arrangement according to any one of claims 1 to 8, **characterised in that** the first and second seal element (5, 6) are engaged by a groove-spring connection (10).

10. Sealing arrangement according to any one of claims 1 to 9, **characterised in that** the cross-section adjustment member (1) is formed as a cylindrical or spherical hollow body which is mounted rotatably in a sleeve body (11), the corresponding tube portions (4) being arranged on the sleeve body (11) for fluid communication.

11. Sealing arrangement according to any one of claims 1 to 10, **characterised in that** the first and second seal element (5, 6) are annular.

12. Sealing arrangement according to any one of claims 1 to 11, **characterised in that** the first seal element (5) consists of polyvinylidene fluoride or polytetrafluoroethylene.

13. Sealing arrangement according to any one of claims 1 to 12, **characterised in that** the second seal element (6) consists of ethylene-propylene-diene rubber.

## Revendications

1. Aménagement d'étanchéité pour un tiroir rotatif, présentant un élément de réglage de section transversale (1) avec unesurface d'enveloppe (2),qui présente au moins une ouverture de passage (3), ainsi qu'une section tubulaire (4) adjacente à l'élément de réglage de section transversale (1) avec une entrée, qui peut être mise en superposition au moins partielle avec l'ouverture de passage (3) par rotation de l'élément de réglage de section transversale (1) autour d'un axe de rotation (B), **caractérisé en ce que**, le long de l'extension axiale (A) de la section tubulaire (4), on agence un premier élément étanche (5), un second élément étanche (6) et un dispositif de précontrainte (7), qui forment un canal d'écoulement pour un fluide, dans lequel le premier élément étanche (5) est appliqué de manière étanche sur la surface d'enveloppe (2) de l'élément de réglage de section transversale (1) et dans lequel le second élément étanche (6) est conformé élastique et est agencé entre le premier élément étanche (5) et le dispositif de précontrainte (7).

2. Agencement d'étanchéité selon la revendication 1, **caractérisé en ce que** les premier et second éléments étanches (5, 6) sont conformés élastiques, dans lequel le premier élément étanche (5) présente une dureté Shore supérieure à celle du second élément étanche (6).

3. Agencement d'étanchéité selon la revendication 1 ou 2, **caractérisé en ce que** le second élément étanche (6) présente un siège (8), dans lequel est agencé un élément à ressort (9), qui peut appliquer dans la direction axiale (A) une force, qui agit en s'étendant axialement sur le second élément étanche (6).

4. Agencement d'étanchéité selon la revendication 3, **caractérisé en ce que** l'élément à ressort (9) se présente sous la forme d'un ressort de compression, en particulier d'un ressort hélicoïdal.

5. Agencement d'étanchéité selon l'une quelconque des revendications 1 à 4, **caractérisé en ce que** le dispositif de précontrainte (7) peut être déplacé dans sa position axiale (A) et peut être fixé dans une position de serrage (C).

6. Agencement d'étanchéité selon l'une quelconque des revendications 1 à 5, **caractérisé en ce que** le dispositif de précontrainte (7) comprime en position de serrage (C) l'élément à ressort (9) dans le second élément étanche (6) de sorte que le premier élément étanche (5) soit comprimé par le second élément étanche (6) contre l'élément de réglage de section transversale (1), la force d'application (F) se situant au-dessus d'une valeur de seuil.

7. Agencement d'étanchéité selon l'une quelconque des revendications 1 à 6, **caractérisé en ce que** le dispositif de précontrainte (7) est formé par un corps annulaire avec un filet externe, qui est en prise avec un filet interne de la section tubulaire (4).

8. Agencement d'étanchéité selon l'une quelconque des revendications 1 à 7, **caractérisé en ce que** les premier et second éléments étanches (5, 6) sont en prise par adaptation de forme, par adhérence ou par assemblage matériel.

9. Agencement d'étanchéité selon l'une quelconque des revendications 1 à 8, **caractérisé en ce que** les premier et second éléments étanches (5, 6) sont en prise par un assemblage à rainure et languette (10).

10. Agencement d'étanchéité selon l'une quelconque des revendications 1 à 9, **caractérisé en ce que** l'élément de réglage de section transversale (1) est conformé en corps creux cylindrique ou sphérique, qui est monté à rotation dans un corps d'enveloppe (11), dans lequel les sections tubulaires (4) correspondantes sont agencées sur le corps d'enveloppe (11) pour l'échange de fluide.

11. Agencement d'étanchéité selon l'une quelconque des revendications 1 à 10, **caractérisé en ce que** les premier et second éléments étanches (5, 6) se présentent sous une forme annulaire.

12. Agencement d'étanchéité selon l'une quelconque des revendications 1 à 11, **caractérisé en ce que** le premier élément d'étanchéité (5) est constitué de poly(fluorure de vinylidène) ou de polytétrafluoro-éthylène.

13. Agencement d'étanchéité selon l'une quelconque des revendications 1 à 12, **caractérisé en ce que** le second élément étanche (6) est constitué de caoutchouc à base d'éthylène-propylène-diène.
